# EUROPÄISCHE PATENTSCHRIFT

(11) **EP 0 580 682 B1**
(45) Veröffentlichungstag und Bekanntmachung des Hinweises auf die Patenterteilung: **05.03.1997**
(21) Anmeldenummer: 92908505.8
(22) Anmeldetag: 13.04.1992
(51) Int. Cl.: E06B 9/24

(54) **AUFROLLBARE WÄRMEDÄMMVORRICHTUNG**
ROLL-UP THERMAL INSULATOR
ISOLATEUR THERMIQUE ENROULABLE

(30) Priorität: 16.04.1991 DE 9104579 U
(43) Veröffentlichungstag der Anmeldung: 02.02.1994
(73) Patentinhaber: ASMUSSEN, Edgar, D-24941 Jarplund-Weding (DE)
(72) Erfinder: ASMUSSEN, Edgar, D-24941 Jarplund-Weding (DE)
(74) Vertreter: Gerbaulet, Hannes
(86) Internationale Anmeldenummer: EP9200835
(87) Internationale Veröffentlichungsnummer: WO9218737

(56) Entgegenhaltungen:
- EP-A- 0 132 497
- FR-A- 1 309 194
- NL-A- 7 805 464
- US-A- 4 194 550
- US-A- 4 802 523

## Beschreibung

### Anwendungsgebiet

Die aufrollbare Wärmedämmvorrichtung ist überall dort einsetzbar, wo transparente Flächen wie Fenster, Glasflächen oder Türen an Gebäuden möglichst effektiv gedämmt werden sollen und wo eine hohe Effektivität bei gleichzeitig möglichst geringem Aufwand gewünscht wird.

Die Erfindung bezieht sich auf eine aufrollbare Wärmedämmvorrichtung in Form einer Flächenstruktur, die im ausgerollten Zustand ein Mehrkammersystem zur Bereitstellung von luftgefüllten, vorzugsweise zirkulationsfreien Parzellen bildet, deren Volumen beim Aufrollen wieder verkleinerbar ist, und die als Wärmedämmatte ausgebildet ist, die zumindest zwei hintereinanderliegende Folien aufweist, wobei jeweils zwischen zwei benachbaraten Folien in einem Abstand Distanz stege angeordnet sind.

### Stand der Technik

Aufrollbare Wärmedämmvorrichtungen sind bereits in verschiedensten Versionen entwickelt worden. Unter dem Gesichtspunkt, daß die Wärmedämmvorrichtung im aufgerollten Zustand ein möglichst kleines Volumen in Anspruch nehmen soll, andererseits jedoch nach dem Ausrollen ein möglichst hoher Wärmedämmeffekt sichergestellt sein soll, hat man auch bereits versucht, mit speziell gestalteten Mehrschicht-Strukturen zu arbeiten. So ist beispielsweise aus der EP-PS 0 160 686 eine aufrollbare Wärmedämmvorrichtung gemäß dem Oberbegriff des Anspruchs 1 bekannt, deren besonderer Vorzug darin liegt, daß sich beim Aufrollen selbsttätige größervolumige Luftkammern bilden, in die seitlich Luft eingesaugt wird, wodurch sich ein hevorragender Wärmedämmeffekt ergibt. Beim Aufrollen hingegen werden diese Luftkammern zusammengedrückt, so daß die flächige Wärmedämmstruktur nur sehr wenig Platz in Anspruch nimmt und deshalb bequem in einem Aufwickelkasten untergebracht werden kann.

Aus der NL-A-78 05 464 ist bereits eine aufrollbare Wärmedämmvorrichtung in Form einer Flächenstruktur bekannt, die im ausgerollten Zustand ein Mehrkammersystem zur Bereitstellung von luftgefüllten, vorzugsweise zirkulationsfreien Parzellen bildet, deren Volumen beim Aufrollen wieder verkleinerbar ist, und die als Wärmematte ausgebildet ist, welche zumindest zwei hintereinanderliegende Folien aufweist, wobei jeweils zwischen zwei benachbarten Folien in einem Abstand Distanzstege angeordnet sind.

### Aufgabe, Lösung, Vorteile

Der Erfindung liegt die Aufgabe zugrunde, eine derartige, aufrollbare Wärmedämmvorrichtung so weiterzubilden, daß sich mit nach wie vor geringem Raumbedarf im aufgewickelten Zustand noch bessere Wärmedämmwerte bei gleichzeitiger Erhöhung der Transparenz und der Bereitstellung zusätzlicher lichtsteuernder Effekte erzielen lassen.

Diese Aufgabe wird durch die im Patentanspruch 1 gekennzeichneten Merkmale gelöst.

Dabei ist erfindungsgemäß vorgesehen, daß die Flächenstruktur als mehrschichtige Dämmatte ausgebildet wird, die zumindest zwei hintereinanderliegende, vorzugsweise hochtransparente Folien aufweist, deren Parallelabstand zueinander über im Vertikalabstand versetzte und mit benachbarten Folien jeweils gelenkig verbundene Stege steuerbar ist. Beim Aufrollen der Wärmedämmatte nehmen die Stege nur einen sehr kleinen Bauraum in Anspruch, nämlich den Platz ihrer Stärke, die bei einem Wert unter 1 mm gehalten werden kann. Im ausgerollten Zustand hingegen werden die Stege dazu benutzt, die hintereinnderliegenden Folien auseinanderzuspreizen, und zwar ähnlich einem Lenker-Parallelogramm, das dann am breitesten wird, wenn der Winkel zwischen Steg und Folienfläche 90° beträgt. In dieser Stellung erreicht die Dämmatte gleichzeitig ihre größte Horizontalaussteifung.

Bezogen auf den beim Aufrollen sehr kleinen benötigten Bauraum läßt sich durch die erfindungsgemäßen Maßnahmen ein Maximum an Hohlraumvolumen schaffen, das wirksam zur Wärmedämmung herangezogen werden kann. Dabei ergibt sich der zusätzliche Vorteil, daß die Distanzhalte-Stege durch entsprechende Beschichtungen auch dazu herangezogen werden können, die Lichtverhältnisse in einem Bauwerk, dessen Fenster mit der erfindungsgemäßen, aufrollbaren Wärmedämmvorrichtung ausgestattet sind, gezielt zu steuern, indem die verschiedenen Winkellagen der Stege bezüglich der Folienflächen zur Beeinflussung der Lichtreflexion genutzt werden.

Da die zwischen den hintereinanderliegenden Folien eingeschlossenen Hohlräume seitlich mittels einer gesteuerten Verschlußeinrichtung verschließbar sind, kann jegliche Zirkulation in den Wärmedämmräumen ausgeschaltet und der Wärmedämmeffekt zusätzlich verbessert werden. Die Verschlußeinrichtung wird vorzugsweise von zwei seitlich angeordneten Verschlußplatten gebildet, die dann zeitlich gesteuert, wenn die Wärmedämmatte vollständig ausgefahren ist, seitlich gegen die Matte gedrückt werden. Dabei wird vorzugsweise eine elastische Dichtungsschicht verwendet, die zum einen sicherstellt, daß eine vollständige Abdichtung vorgenommen wird und die andererseits die Wärmedämmattenstruktur weitestgehend vor Beschädigungen schützt.

Eine besonders einfache Steuerbarkeit des Abstandes zwischen benachbarten Folien ergibt sich durch die erfindungsgemäße Ausgestaltung. Es hat sich gezeigt, daß die Beschwerungen in Verbindung mit den vertikal beabstandeten Stegen für eine ausreichende Spannung der Mehrschicht-Wärmedämmatte sorgen, so daß die Wärmedämmmatte im vollständig ausgefahrenen Zustand für den Betrachter - sei es von der Innenseite, sei es von der Außenseite des Gebäudes betrachtet - kaum wahrgenommen wird, da dieses Verspannungsprinzip die Möglichkeit eröffnet, mit extrem dünnen Folien, beispielsweise mit einem Dickenbereich zwischen 0,1 und 0,2 mm zu arbeiten. Dabei ergibt sich der weitere Vorteil, daß die Beschwerungen in Verbindung mit der Aufrolleinrichtung zur Steuerung des Abstandes benachbarter Folien und damit zur winkelmäßigen Lagesteuerung der Stege bezüglich der Wärmedämmatten-Fläche genutzt werden können. Hierdurch lassen sich im wesentlichen drei grundlegende Funktionen der erfindungsgemäßen Wärmedämmatte realisieren:
Zum einen im vollständig aufgespreizten Zustand der Wärmedämmatte, d.h. mit maximalem Abstand der Folien untereinander eine Aufhellwirkung, in der die dann horizontal liegenden Stege zur Reflexion des Sonnenlichts in das Innere des Gebäudes genutzt werden. Die zweite Funktion besteht darin, eine gewisse Abdunklung, d.h. eine Teilreflexion des einfallenden Lichtes zu bewirken, die dann auftritt, wenn die Stege bezüglich der Folienfläche um etwa 45° geneigt sind. Schließlich läßt sich durch geeignete Gestaltung bzw. Materialwahl im Bereich der Stege eine Abdunklung des Raumes erzielen, die dann vorliegt, wenn die Steg-Gelenke vollständig zusammengeklappt, d.h. parallel zu den benachbarten Folien ausgerichtet sind.

Die Folien können je nach Anforderungsprofil aus allen denkbaren Kunststoff-Materialien gebildet sein, wie hochtransparent, d.h. glasklar und durchsichtig mit einer erhöhten Wärmedämmwirkung durch teilweise Metallbedampfung der Folien, ohne die vorstehend beschriebenen drei Grundfunktionen zu beeinträchtigen.

Die äußere Mutterfolie der außenliegenden Dämmatte könnte dagegen im Bedarfsfall aus Gründen des erhöhten Wetter- und Einbruchsschutzes aus einer hochreißfesten Kunststoffmatte mit Metallgewebeeinlage bestehen.

Die vorstehend genannten Effekte sind bereits dann realisierbar, wenn lediglich zwei hitnereinanderliegende, dünne Folien verwendet werden. Die vorteilhafte Struktur der erfindungsgemäßen Wärmedämmatte entfaltet jedoch dann besonders vorteilhafte Wirkungen, wenn mehr als zwei hintereinandergeschaltete Folien, beispielsweise fünf oder sechs derartige Folien über identische Steganordnungen zu einer Parallelogramm-Lenker-Struktur verbunden werden.

Die gelenkige Verbindung der benachbarten Folien über die Distanz stege erfolgt vorzugsweise gemäß Anspruch 5 über scharnierartige ausgebildete Klebelaschen, die somit zwei über eine Art Filmscharnier miteinander verbundene Laschenschenkel haben, die auch von verschweißbarem Folienmaterial spannungsfrei gebildet sein können, wobei der eine Schenkel mit dem Steg und der andere Schenkel mit der daran angrenzenden Folie verbunden ist. Die Klebelaschen sind zu beiden Enden des Steges auf jeweils unterschiedlichen Seiten angeordnet, so daß das Filmscharnier bei der parallelogrammartigen Verschiebung zur Steuerung des Abstandes benachbarter Folien zu beiden Seiten des Stegendes identisch beansprucht wird.

Wenn der Vertikalabstand der Stege im wesentlichen der maximalen Breite, d.h. der Breite der Wärmedämmatte im maximal aufgespreizten Zustand entspricht, lassen sich die vorstehend beschriebenen drei Grundfunktionen optimal realisieren. Dennoch kann auch der vorgegebene Vertikalabstand der horizontal orientierten Stege zwecks Optimierung der Wärmedämmwerte untereinander verkleinert werden.

Es hat sich gezeigt, daß es das erfindungsgemäße Konzept selbst bei dünnsten Folien ermöglicht, insbesondere unter Ausnützung der Einzel-Beschwerungen für jede Folie, eine glatt gespannte Wärmedämmatte höchster Transparenz bereitzustellen, wobei dieses Konzept darüber hinaus der beim Aufrollen einer Matte auf eine Rolle vorgegebenen Kinematik dahingehend zugute kommt, daß hierbei mit einfachen Mitteln eine Schrägstellung der Stege im oberen Bereich und damit ein höhenmäßig versetztes Aufrollen der einzelnen hintereinandergeschalteten Folien eingeleitet wird. Die Drehbewegung beim Aufrollvorgang kann dadurch äußerst günstig zur Steuerung des Abstandes der Folien untereinander genutzt werden.

Bezüglich der zeitlichen Steuerung ist es möglich, mit Sensorkontakten zu arbeiten, die die Verschlußeinrichtung automatisch in Funktion und außer Funktion treten lassen, wenn die Position der Wärmedämmatte dies erlaubt bzw. erfordert. Die Wärmedämmvorrichtung eignet sich dabei gleichermaßen für eine innenliegende und eine außenliegende Fensterdämmung, wobei wegen der totalen Transparenz der gesamten Wärmedämmatte eine Glasflächendämmung in den Wintermonaten rund um die Uhr sowohl in Wohn-, Büro- und sonsten Bereichen möglich ist. In der Steuerung über die Sensortechnik liegt die positive Möglichkeit der solaren Energiespeicherung. Bei Sonneneinstrahlung rollt die Dämmatte auf. Sobald diese gespeicherte Energie durch die Fenster wieder nach außen abzufließen droht, verhindert die abgerollte Dämmatte diesen Prozeß. Wenn zumindest eine außenliegende Mutterfolie in einer seitlichen Schiene geführt ist, in der eine Lippendichtung aufgenommen ist, läßt sich bei Außenmontage eine ausreichende Winddichtigkeit erzielen. Bei der Innenmontage verhindert diese Ausbildung die Wasserdampf-Durchlässigkeit zu den kalten Fensterscheiben, so daß eine sogenannte "Eispanzerbildung" nicht auftreten kann.

Mit der zusätzlichen doppelten Lippendichtung gemäß Anspruch 9 und der unteren Abdichtungen läßt sich eine wirksame Luftabdichtung gegen Dampfdiffusion erzielen.

Eine besonders vorteilhafte Ausgestaltung ist Gegenstand des Anspruchs 10, mit der es gelingt, die Wärmedämmatte zusätzlich zu stabilisieren, so daß selbst bei Anordnung im Außenbereich ein Flattern durch Windeinflüsse wirksam ausgeschlossen werden kann. Hier wirken gleichfalls die horizontalen Stegformationen als Stabilisatoren.

Vorteilhafterweise ist durch die neue Dämmbahntechnik auch die Möglichkeit gegeben, die Wärmedämmvorrichtung auch bei geneigten bzw. horizontal liegenden Glasflächen zu verwenden, da dann die Bewegungsabläufe mittels Seilzug o.ä. erfolgen können.

Vorteilhafte Weiterbildungen sind Gegenstand der übrigen Unteransprüche.

### Kurze Beschreibung der Zeichnungen

Nachstehend werden anhand schematischer Zeichnungen mehrere Ausführungsbeispiele der Erfindung näher erläutert. Es zeigen
- **Fig. 1**: einen Vertikalabschnitt im Bereich eines Bauwerk-Fensters, das mit einer aufrollbaren Wärmedämmvorrichtung gemäß einer ersten Ausführungsform außenliegend ausgestattet ist,
- **Fig. 2**: eine der Figur 1 ähnliche Ansicht einer weiteren Ausführungsform der Erfindung in einer ersten Ausführungsform innenliegend,
- **Fig. 3**: eine der Figur 2 ähnliche Ansicht der Wärmedämmvorrichtung gemäß Figur 2 in einer zweiten Stellung,
- **Fig. 4**: in einer den Figuren 2 und 3 ähnlichen Ansicht die Wärmedämmvorrichtung gemäß Figur 2 und 3 in einer dritten Stellung,
- **Fig. 5**: einen Horizontalabschnitt durch die Fensteröffnung, in der eine weitere Ausführungsform der aufrollbaren Wärmedämmvorrichtung untergebracht ist,
- **Fig. 6 bis 8**: schematische Prinzipbilder zur Verdeutlichung der Funktionsweise der aufrollbaren Wärmedämmvorrichtung in Form einer gesteuert aufspreizbaren Wärmedämmatte.

### Detaillierte Beschreibung der Erfindung und bester Weg zur Ausführung der Erfindung

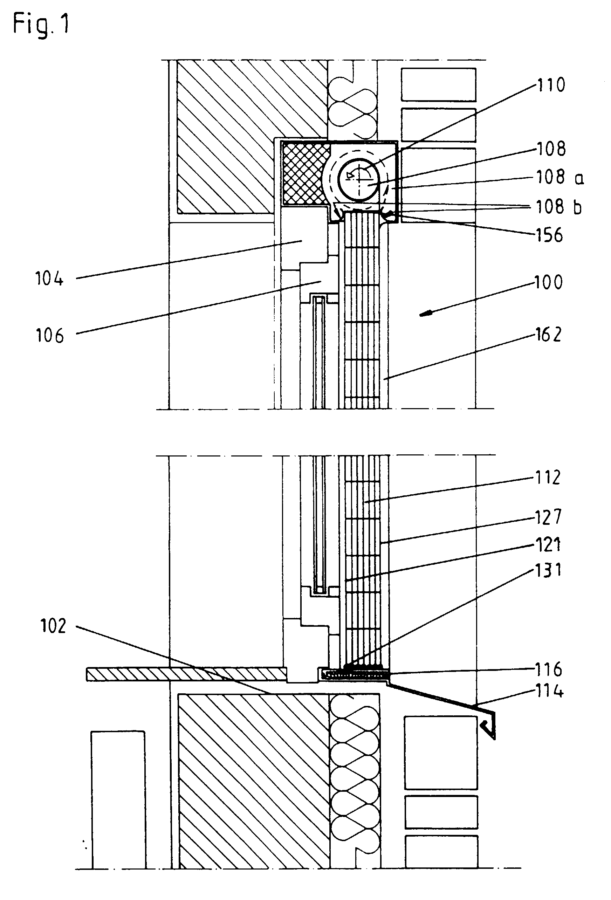

In Figur 1 ist mit 100 eine erste Ausführungsform einer aufrollbaren Wärmedämmvorrichtung in Form einer Wärmedämmatte bezeichnet, die in einer Fensteröffnung 102 eines Bauwerks montiert ist. Die Wärmedämmvorrichtung ist bei dieser Ausführungsform im Außenbereich vorgesehen, d.h. vor einem Fensterrahmen 104 mit zugehörigem Fensterflügel 106. Oberhalb des Fensterrahmens 104 ist eine Aufrollwalze 108 horizontal montiert, auf die - wie durch den Pfeil 110 angedeutet - eine daran befestigte, nachstehend näher zu beschreibende Wärmedämmmatte 112 aufgewickelt werden kann. Der Einlaufbereich des die Aufrollwalze 108 beinhaltenden Raumes 108a ist dabei mittels Lippendichtungen 108b versehen, um eine Luftabdichtung gegen Dampfdiffusion zu erreichen. Mit 114 ist ein Wasserableitblech und mit 116 eine Bodenplatte bezeichnet, deren Funktion im folgenden näher beschrieben wird.

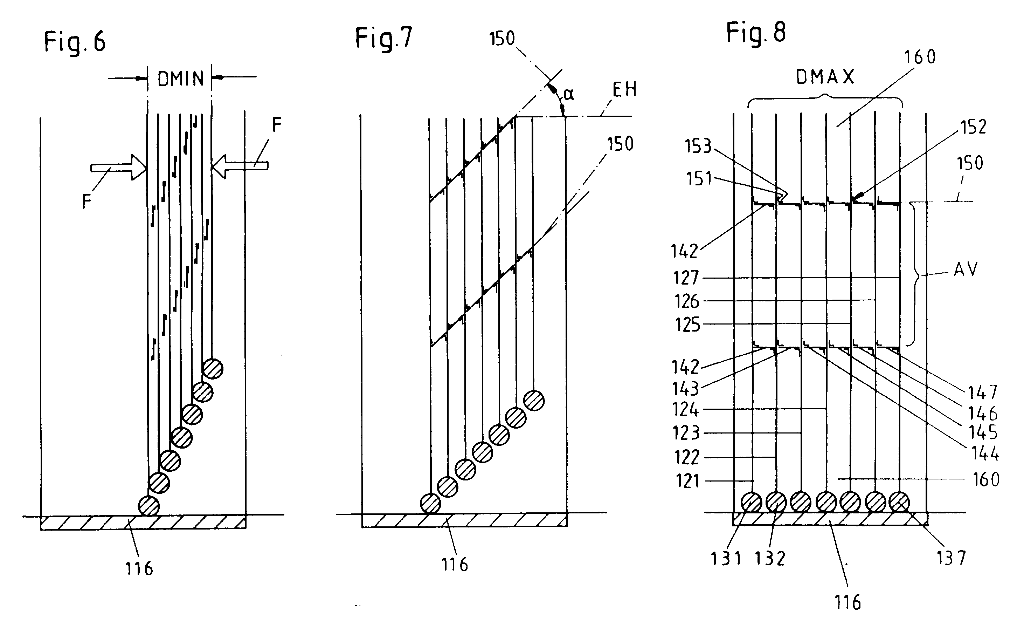

Die Wärmedämmatte 112 besteht aus mehreren, im gezeigten Ausführungsbeispiel gemäß Figur 1 sieben hintereinandergeschalteten dünnen Folien mit einer Dicke von beispielsweise 0,1 bis 0,2 mm. Diese Folien sind aus hochtransparentem Werkstoff hergestellt, der zusätzlich mit einer wärmestrahlungsreflektierenden oder einer anderen geeigneten Beschichtung versehen sein kann. Diese Folien sind mit den Bezugszeichen 121 bis 127 bezeichnet. Die Wärmedämmatte 112 hat beispielsweise im vollständig ausgefahrenen Zustand eine Gesamt-Dickenerstreckung von etwa 60 mm. Diese wird dadurch erreicht, daß die einzelnen Folien 121 bis 127 durch ein speziell gestaltetes Verstrebungssystem im aufgespreizten Zustand stabilisiert sind. Dieses Verstrebungssystem wird im folgenden unter Bezugnahme auf die Figuren 6 bis 8 näher erläutert.

Man erkennt aus diesen Darstellungen, daß jede Folie bodenseitig ein Beschwerungsgewicht 131 bis 137 trägt, das beispielsweise als horizontal verlaufender Metallstab ausgebildet ist. Zwischen jeweils zwei benachbarten Folien sind im Vertikalabstand AV, der im wesentlichen der Maximaldicke DMAX der Wärmedämmatte 112 entspricht, Distanzstege 142 bis 147 angeordnet, die identisch ausgebildet sind und beispielsweise von dünnen Metall- oder Kunststoffstreifen mit oder ohne strahlungsreflektierende Beschichtung vorgesehen sind. Die Anordnung hintereinanderliegender Stege 142 bis 147 ist derart, daß der Endpunkt des ersten Steges 142 im wesentlichen an der Stelle liegt, an der sich der Endpunkt des anschließenden Steges 143 anschließt. Auf diese Art und Weise liegen hintereinanderliegende Stege im ausgefahrenen bzw. ausgerollten Zustand der Wärmedämmatte 112 in Parallelebenen 150 zueinander.

Die Verbindung der Stege 142 bis 147 mit den Folien 121 bis 127 erfolgt über Gelenkelemente 152, von denen ein Schenkel 151 mit der Folie und der andere Schenkel 153 mit dem betreffenden Steg verbunden, beispielsweise spannungsfrei verklebt ist. Zwischen den Schenkeln 151,153 wird ein Gelenk, beispielsweise in Form eines Filmscharnier-Gelenks, ausgebildet. Die Gelenkelemente 152 im Bereich der jeweiligen entgegengesetzten Enden der Stege 142 bis 147 sind auf unterschiedlichen Seiten der Stege angeordnet. Mit dieser Konstruktion ergibt sich folgende Funktionsweise:

Vorzugsweise über die Aufrollwalze 108 und eine nicht näher dargestellte Gurt-Verbindungsanordnung zwischen dieser und einer oberen Stegstruktur 156 wird der Winkel ALPHA, den die obere Stegstruktur 156 mit der Horizontalebene EH bildet, und damit auch der Winkel zwischen den Parallelebenen 150 und einer Horizontalebene EH eingestellt. Die Folien 121 bis 127 werden dadurch höhenmäßig gestaffelt, wie dies in Fig. 7 erkennbar ist. Dies wird dadurch ermöglicht, daß die Gelenkelemente 152 simultan und mit gleicher Belastung in Funktion treten, so daß im vollständig aufgespreizten Zustand der Wärmedämmatte 112 Rechteckquerschnitt aufweisenden Luftkammern 160 schmaler werden und den Querschnitt eines Parallelogramms erhalten.

Figur 6 zeigt die Wärmedämmatte 112 in einer Stellung, in der die höhenmäßige Staffelung der hintereinandergeschalteten Folien 121 bis 127 am größten ist. In dieser Stellung stehen die Stege 142 bis 147 senkrecht, d.h. sie sind parallel zu den Folien ausgerichtet. Diesen Zustand nehmen die Folien dann ein, wenn der Aufwickelvorgang eingeleitet wird. Es ist ersichtlich, daß in diesem Zustand die Dickenerstreckung ein Minimum annimmt, nämlich das Maß DMIN, das bei Einwirkung einer Seitenkraft, wie sie beim Aufrollen auf die Aufrollwalze 108 auftritt, noch weit unterschritten werden kann. Die Wärmedämmatte 112 nimmt dementsprechend bei Aufrollen einen extrem kleinen Bauraum in Anspruch, obwohl im vollständig aufgespreizten Zustand - wie aus Figur 8 bzw. Figur 1 ersichtlich - ein verhältnismäßig großes Luftpolstervolumen in den Luftkammern 160 bereitgestellt wird.

Figur 1 zeigt die Wärmedämmvorrichtung für den Außenbereich, d.h. für den Fall, daß die Wärmedämmatte 112 außerhalb des Fensterflügels 106 angeordnet ist. Um für diesen Fall eine zusätzliche Stabilisierung der Wärmedämmatte 112 gegen Windeinwirkungen bereitzustellen, bestehen die Beschwerungsgewichte 131 aus ferromagnetischem Material, wie z.B. Stahl oder Eisen, und die Bodenplatte 116 besteht aus einem magnetisierten Werkstoff oder trägt eine daraus hergestellte Beschichtung. Die einzelnen Folien werden dadurch im vollständig ausgerollten Zustand der Wärmedämmatte 112 gespannt, so daß sich selbst bei größeren Windgeschwindigkeiten keine unangenehmen Verwerfungen der Wärmedämmatte 112 ergeben.

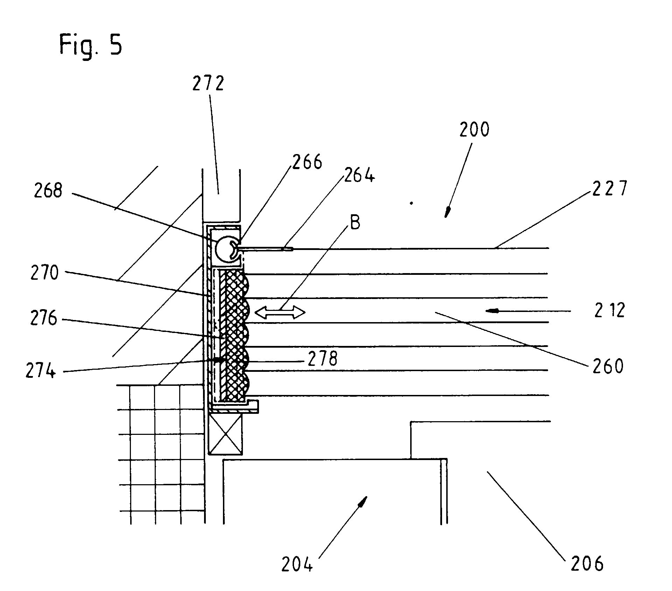

Mit 162 ist eine Führungsschiene gekennzeichnet, mit der ein in Figur 1 nicht näher dargestellter Führungsansatz der äußersten Mutterfolie 127, vorzugsweise unter Eingriff in eine Lippendichtung, in Eingriff steht, um eine absolute Winddichtigkeit bereitzustellen. Es muß ein stabiles Luftpolster zwischen Rückseite, Dämmatte und Fensterelement gegeben sein, um den raumseitigen Wärmeabfluß zu vermeiden. Die Funktion dieser Abdichtung soll nachfolgend anhand der Figur 5 näher beschrieben werden, die einen Horizontalschnitt durch eine etwas modifizierte Ausführungsform der allgemein mit 200 bezeichneten Wärmedämmvorrichtung darstellt. Der Aufbau der Wärmedämmatte 212 ist im wesentlichen mit demjenigen der zuvor beschriebenen Ausführungsform gemäß Figur 1, 6 bis 8 vergleichbar, so daß für die entsprechenden Komponenten ähnliche Bezugszeichen verwendet werden, die jedoch als erste Ziffer anstelle der "1" eine "2" tragen.

Man erkennt aus dieser Darstellung, daß die äußere Mutterfolie 227 randseitig einen Führungsfortsatz 264 trägt, der mit einem Formteil 266 in eine Seitenführung 268 mit Lippendichtung eingreift. Die Seitenführung 268 befindet sich in einem Kasten 270, der vorzugsweise im Putz 272 versenkt ist. Im Kasten 270, der im übrigen auch bei der Ausführungsform gemäß Figur vorgesehen ist, ist eine vertikal ausgerichtete Verschlußplatte 274 angeordnet, die aus einer Basis 276 und einer Dichtungsschicht 278 besteht, welche beispielsweise von einer Moosgummimatte gebildet ist. Die Verschlußplatte 274 ist in seitlicher Richtung bewegbar, was durch den Doppelpfeil B angedeutet ist. Mit gestrichelten Linien ist in Figur 5 diejenige Stellung angedeutet, die die Verschlußplatte 274 einnimmt, wenn die Wärmedämmatte 212 ausgefahren wird. Im vollständig ausgefahrenen Zustand tritt eine Steuereinrichtung in Funktion, die die seitlichen Verschlußplatten 274 an die Seitenflächen der Wärmedämmatte 212 heranführt und gegen diese drückt, wodurch ein hermetischer Abschluß der Lufträume 260 bewirkt wird. Die Steuerung der Andrückeinrichtung für die Verschlußplatten 274 kann beispielsweise durch einen über das äußerste Beschwerungsgewicht betätigten Sensorkontakt erfolgen. Umgekehrt wird durch diesen Sensorkontakt beim Wiederabheben des äußersten Beschwerungs- oder Kontergewichts die Verschlußplattenanordnung seitlich weggezogen, wobei ein Federzug Verwendung finden kann. Diese Mechanik hat den Vorteil, daß zum einen der Aufrollvorgang der Wärmedämmatte 212 nicht behindert wird. Sie sorgt auf der anderen Seite aber auch dafür, daß beim Ausfahren unter Vergrößerung durch die Stegspreizung des zwischen den Folien eingeschlossenen Luftvolumens ein unbehindertes seitliches Ansaugen von Luft ermöglicht wird. Die Luftkammern werden erst dann geschlossen, wenn sie sich auf die volle Größe ausgedehnt haben, so daß ein Maximum an Wärmedämmwirkung bereitgestellt wird. Vorzugsweise wird die Verschlußplatte 274 seitlich schräg nach oben bzw. schräg nach unten bewegt, um gleichzeitig eine gewisse Straffungsfunktion für die Wärmedämmattenstruktur 212 erfüllen zu können.

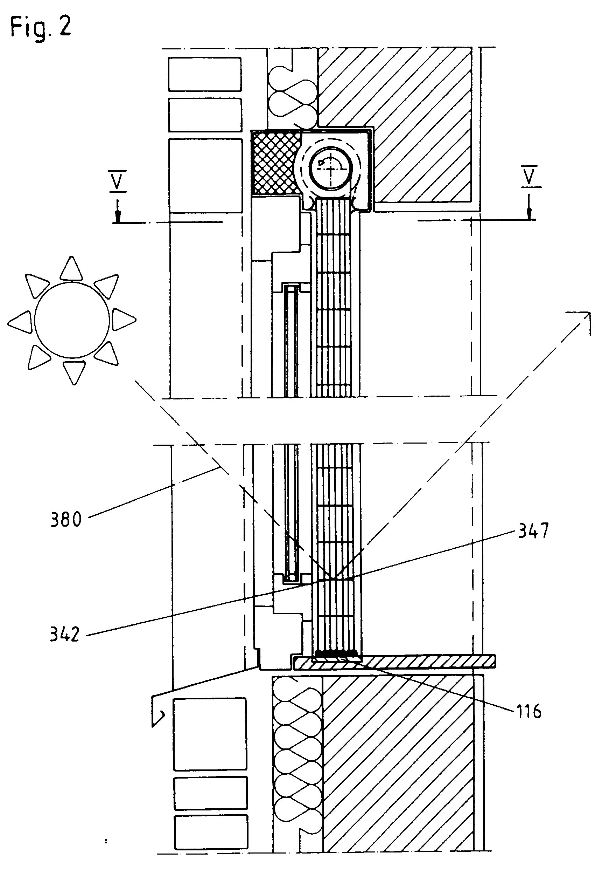

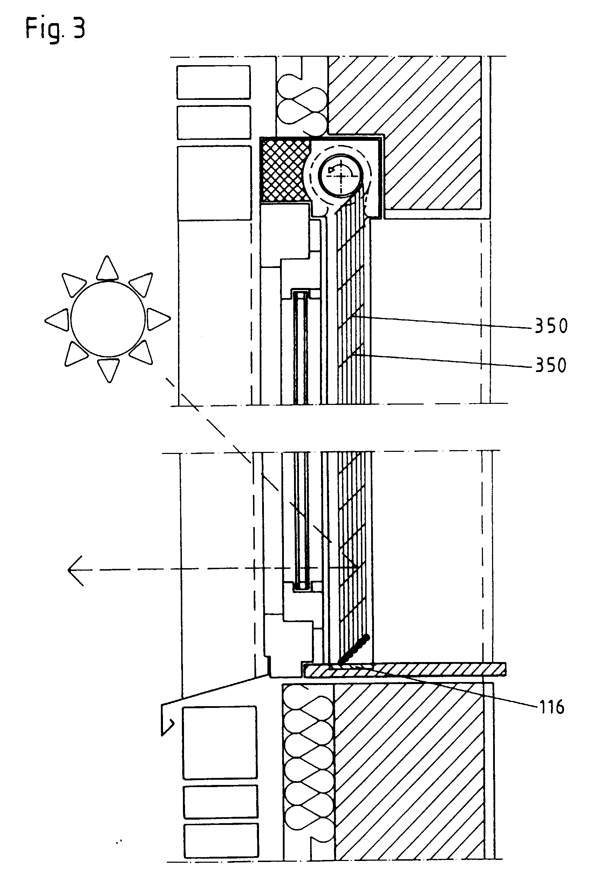

Schließlich wird anhand einer weiteren Ausführungsform der Wärmedämmvorrichtung, die für die Innenmontage gedacht ist, anhand der Figuren 2 bis 4 erläutert, welche drei Grundfunktionen bezüglich der Lichtsteuerung durch die Wärmedämmatte erzielbar sind. Diese dritte Ausführungsform ist allgemein mit 300 bezeichnet. Elemente, die mit denjenigen Komponenten vergleichbar bzw. identisch sind, die bei den zuvor beschriebenen Ausführungsbeispielen bereits vorhanden sind, sind wiederum mit ähnlichen Bezugszeichen gekennzeichnet, bei denen anstelle der ersten Ziffer eine "3" gesetzt ist.

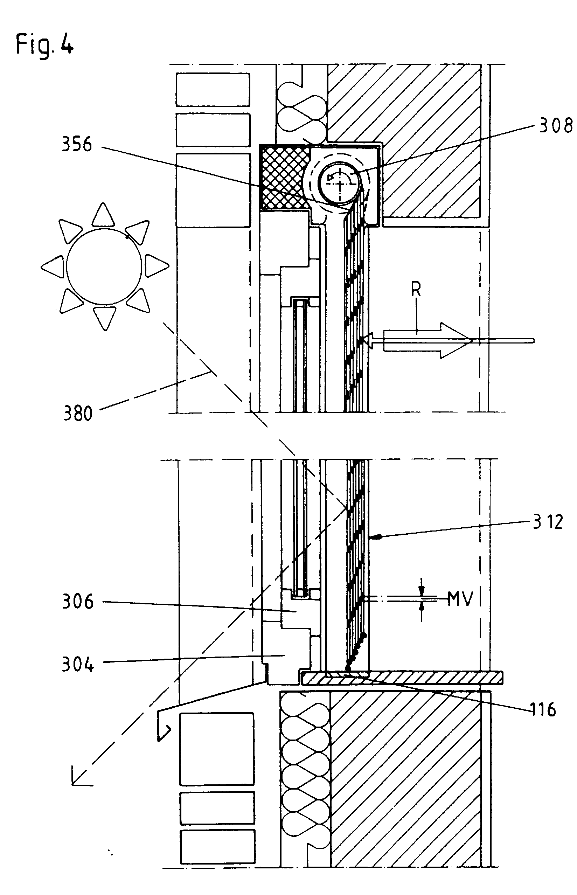

Figur 4 zeigt die Wärmedämmatte 312 in einer Stellung unmittelbar nach dem Ausrollvorgang, in der die oberste Stegstruktur 356 über die nicht näher dargestellte Haltegurtanordnung so steil gehalten ist, daß die Stege 342 bis 347 ein maximales vertikales Versetzungsmaß MV haben. Durch die vorstehend beschriebene Dimensionierung der Steglänge derart, daß die Summe der hintereinandergeschalteten Stege dem Vertikalabstand AV entspricht, ergibt sich in der Stellung gemäß Figur 4 eine nahezu vollständige Abdunklung des Innenraums des Gebäudes, was durch den Pfeil R angedeutet ist. Wenn die Wärmedämmatte 312, beispielsweise durch weiteres Nachlassen der Aufrollwalze 308, etwas weiter ausgefahren wird, richten sich die Distanzstege 342 bis 347 - wie anhand Figur 7 beschrieben - in einer Reihe von Parallelebenen 350 aus. Da die Stege 342 bis 347 vorzugsweise lichtreflektierend sind, werden Sonnenstrahlen 380 nach wie vor reflektiert, so daß sich ein gewisser Abdunklungseffekt im Gebäude-Innenraum realisieren läßt. Im vollständig ausgefahrenen, d.h. auf die volle Breite ausgespreizten Zustand der Wärmedämmatte 312 - wie in Figur 2 gezeigt - können die nunmehr in Horizontalebenen ausgerichteten, hintereinanderliegenden Stege 342 bis 347 zur Aufhellung des Raumes herangezogen werden, was durch den in das Innere des Raums reflektierten Sonnenstrahl 380 angedeutet werden soll.

Figur 2 läßt darüber hinaus erkennen, daß die Darstellung gemäß Figur 5 auch als Schnitt gemäß V-V in Figur 2 verstanden werden kann. Es soll jedoch an dieser Stelle hervorgehoben werden, daß die Ausgestaltung gemäß Figur 5 in identischer Ausführung auch dann genutzt werden kann, wenn die Wärmedämmatte im Außenbereich montiert ist.

## Patentansprüche

1. Aufrollbare Wärmedämmvorrichtung (100;200) in Form einer Flächenstruktur, die im ausgerollten Zustand ein Mehrkammersystem zur Bereitstellung von luftgefüllten, vorzugsweise zirkulationsfreien Parzellen bildet, deren Volumen beim Aufrollen wieder verkleinerbar ist, und die als Wärmedämmatte (112;212;312) ausgebildet ist, die zumindest zwei hintereinanderliegende Folien (121 bis 127;227) aufweist, wobei jeweils zwischen zwei benachbarten Folien (121 bis 127;227) in einem Abstand Distanzstege (142-147) angeordnet sind,
dadurch gekennzeichnet,
daß der Abstand der Folien (121 bis 127;227) zueinander über die im Vertikalabstand (AV) versetzten und mit benachbarten Folien gelenkig verbundenen Distanzstege (142 bis 147; 342 bis 347) steuerbar ist daß die Folien (121-127;227) bodenseitig jeweils eine Beschwerung (131 bis 137) tragen und oberseitig derart mit einer Aufrolleinrichtung (108;308) gekoppelt sind, daß im ausgerollten Zustand eine höhenmäßige Staffelung (MV) der Folien vorliegt, in der die Distanzstege (142 bis 147) im wesentlichen parallel zu den Folien liegen, wobei durch weitere Freigabe der Folien unter Einwirkung der Beschwerungen (131 bis 137) das höhenmäßige Versetzungsmaß sukzessive, vorzugsweise gegen Null gehend, verringerbar ist, daß die Kopplung mit der Aufrolleinrichtung (108;308) derart ausgebildet ist, daß die jeweilige oberste Stegstruktur (156;356) in einer Horizontalebene ausrichtbar ist,
daß die zwischen den hintereinanderliegenden Folien (121 bis 127;227) eingeschlossenen Hohlräume (160;260) seitlich mittels einer gesteuerten Verschlußeinrichtung (274,276,278) verschließbar sind, und daß die Verschlußeinrichtung von jeweils einer senkrecht zur Flächenerstreckung der Wärmedämmatte (212) angeordneten Verschlußplatte (274) gebildet ist, die auf der den Folien-Seitenkanten zugewandten Seite mit einer elastischen Dichtung, vorzugsweise einer elastischen Dichtungsschicht (278), versehen ist.

2. Wärmedämmvorrichtung nach Anspruch 1,
dadurch gekennzeichnet,
daß die Wärmedämmatte mehr als zwei Folien (121 bis 127) hat und daß die Distanzstege so angeordnet sind, daß sie im ausgerollten Zustand der Matte jeweils auf zueinander parallelen Linien (150) liegen.

3. Wärmedämmvorrichtung nach Anspruch 2,
dadurch gekennzeichnet,
daß die Distanzstege (142 bis 147) im vollständig gespreizten Zustand der Dämmatte (112) in vorbestimmtem Vertikalabstand (AV) zueinanderstehenden Horizontalebenen (150) liegen.

4. Wärmedämmvorrichtung nach einem der Ansprüche 1 bis 3,
dadurch gekennzeichnet,
daß die Distanzstege (142 bis 147) mit den Folien über scharnierartige Klebelaschen (151 bis 153) verbunden sind, die mit einem Schenkel (153) auf entgegengesetzten Oberflächen der Distanzstege (142 bis 147) befestigt sind.

5. Wärmedämmvorrichtung nach einem der Ansprüche 1 bis 4,
dadurch gekennzeichnet,
daß der Vertikalabstand (AV) der Distanzstege (142 bis 147) im wesentlichen der maximalen, d.h. der Dicke der Wärmedämmatte (112) im maximal aufgespreizten Zustand entspricht.

6. Wärmedämmvorrichtung nach einem der Ansprüche 1 bis 5,
dadurch gekennzeichnet,
daß das Anlegen der Verschlußeinrichtung in Abhängigkeit von der Betätigung einer Matten-Spreizsteuerung erfolgt.

7. Wärmedämmvorrichtung nach einem der Ansprüche 1 bis 6,
dadurch gekennzeichnet,
daß die Dichtungsschicht eine Moosgummiplatte (278) aufweist.

8. Wärmedämmvorrichtung nach einem der Ansprüche 1 bis 7,
dadurch gekennzeichnet,
daß zumindest eine außenliegende Mutterfolie (128;227) in einer seitlichen Schiene (268) geführt ist, in der eine Lippendichtung aufgenommen ist.

9. Wärmedämmvorrichtung nach einem der Ansprüche 1 bis 8,
dadurch gekennzeichnet,
daß eine Aufrollwalze (108;308) in einem Kasten untergebracht ist, der einen mit einer Lippendichtung bestückten Schlitz zur Aufnahme der Wärmedämmatte hat.

10. Wärmedämmvorrichtung nach einem der Ansprüche 1 bis 9,
dadurch gekennzeichnet,
daß die Beschwerung von metallischen Körpern, insbesondere von Stäben (131 bis 137) aus ferromagnetischem Material gebildet ist, und daß zur Stabilisierung der Dämmatte (112) bodenseitig eine magnetisierte Platte (116) vorgesehen ist, gegen die die Beschwerungen unter Straffung der Folien (121 bis 128) verschiebbar sind.

11. Wärmedämmvorrichtung nach einem der Ansprüche 1 bis 10,
dadurch gekennzeichnet,
daß die Folien aus hochtransparentem Material, vorzugsweise Kunststoff-Material, bestehen.

12. Wärmedämmvorrichtung nach einem der Ansprüche 1 bis 11,
dadurch gekennzeichnet,
daß die Folien eine Dicke von etwa 0,1 bis 0,2 mm haben.

13. Wärmedämmvorrichtung nach einem der Ansprüche 1 bis 12,
dadurch gekennzeichnet,
daß die Folien zumindest teilweise metallisch bedampft sind.

14. Wärmedämmvorrichtung nach einem der Ansprüche 1 bis 13,
dadurch gekennzeichnet,
daß die Distanzstege (142 bis 147) aus metallisch bedampftem Kunststoffmaterial bestehen.

15. Wärmedämmvorrichtung nach einem der Ansprüche 1 bis 14,
dadurch gekennzeichnet,
daß die Distanzstege aus Kunststoff bestehen und vorzugsweise eine strahlungsreflektierende Beschichtung oder Zusammensetzung haben.

## Claims

1. Roll-up type heat insulation means (100;200) in the form of a flat structure which, in the unrolled state, forms a multi-chamber system for providing air-filled, preferably circulation-free compartments, whose volume can be reduced again when being rolled up and which is constructed in the form of a heat insulating mat (112; 212;312), which possesses at least two consecutively arranged foils (121 to 127;227), in which, in each case, between two adjacent foils (121 to 127;227), spacing webs (142 to 147) are disposed spaced apart from each other,
**characterized in that**
the reciprocal distance of the foils (121 to 127;227) is controllable via the spacing webs (142 to 147; 342 to 347) staggered in the vertical distance (AV) and hingedly connected to adjacent foils, in that the foils (121 to 127;227), on the bottom side, each carry a weighting means (131 to 137) and, on the top side, are coupled to a rolling-up means (108;308) in such a way that, in the unrolled state, a vertical staggering (MV) of the foils exists, in which case the spacing webs (142 to 147) are substantially parallel to the foils, in which case, by means of a further release of the foils by the action of the wighting means (131 to 137), the vertical staggering dimension can be successively reduced, preferably moving towards zero, in that the coupling to the rolling-up means (108;308) is designed in such a way that the respective topmost web structure (156;356) can be aligned in a horizontal plane, in that the hollow spaces (160;260) enclosed between the consecutively located foils (121 to 127;227) can be laterally closed with the aid of a controlled closing means (274,276,278) and in that the closing means is in each case constituted by a closing plate (274) disposed vertically to the planar extension of the heat insulating mat (212) which, on the side facing the lateral rims of the foil, is provided with an elastic seal, by preference an elastic sealing layer (278).

2. Heat insulation means according to Claim 1,
**characterized in that**
the heat insulating mat possesses more than two foils (121 to 127) and in that the spacing webs are disposed so as to, in the unrolled state of the mate, be located in each case on reciprocally parallel lines (150).

3. Heat insulation means according to Claim 1,
**characterized in that**
spacing webs (142 to 147), in the fully extended state of the insulating mat (112), come to be located in horizontal planes (150) arranged at a predetermined vertical distance (AV) relative to each other.

4. Heat insulation means according to any of Claims 1 to 3,
**characterized in that**
the spacing webs (142 to 147) are connected to the foils by means of hinge-like adhesive links (151 to 153), which are attached with one leg (153) to the oppositely located surfaces of the spacing webs (142 to 147).

5. Heat insulation means according to any of Claims 1 to 4,
**characterized in that**
the vertical distance (AV) of the spacing webs (142 to 147) corresponds essentially to the maximal, i.e. the thickness of the heat insulating mat (112) in the maximally extended state of the same.

6. Heat insulation means according to any of Claims 1 to 5,
**characterized in that**
application of the closing means is effected in dependence of the actuation of a mat extension control.

7. Heat insulation means according to any of Claims 1 to 6,
**characterized in that**
the sealing layer possesses a cellular rubber plate (278)

8. Heat insulation means according to any of Claims 1 to 7,
**characterized in that**
at least one externally located master foil (128;227) is guided in a lateral rail (268) in which a lip seal is accommodated.

9. Heat insulation means according to any of Claims 1 to 8,
**characterized in that**
a rolling-up roller (108;308) is housed in a box which possesses a slot fitted with a lip seal for receiving the insulating mat.

10. Heat insulating means according to any of Claims 1 to 9,
**characterized in that**
the weighting means is formed by metallic members, more particularly by rods (131 to 137) of ferromagnetic material and in that, for the stabilization of the insulating mat (112), on the bottom side, a magnetized plate (116) is provided, against which the weighting means are displaceable by a tightening of the foils (121 to 128).

11. Heat insulation means according to any of Claims 1 to 10,
**characterized in that**
the foils are comprised of highly transparent material, preferably plastic material.

12. Heat insulation means according to any of Claims 1 to 11,
**characterized in that**
the foils possess a thickness ranging from approximately 0.1mm to 0.2mm.

13. Heat insulation means according to any of Claims 1 to 12,
**characterized in that**
the foils are at least in part metallically vapour-plated

14. Heat insulation means according to any of Claims 1 to 13,
**characterized in that**
the spacing webs (142 to 147) are comprised of metallically vapour-plated plastic material.

15. Heat insulation means according to any of Claims 1 to 14,
**characterized in that**
the spacing wbes are comprised of plastic and preferably possess a radiation-reflecting coating or composition.

## Revendications

1. Dispositif calorifuge enroulable (100 ; 200) en forme de structure en surface qui, à l'état enroulé, forme un système à compartiments multiples pour la mise à disposition de parcelles remplies d'air, de préférence exemptes de circulation, dont le volume peut être rapetissé à nouveau en enroulant et qui est configuré comme un matelas calorifuge (112 ; 212; 312), qui présente au moins deux feuilles couchées l'une derrière l'autre (121 à 127 ; 227), des baguettes d'écartement (142-147) étant placées respectivement entre deux feuilles voisines (121 à 127 ; 227) à un écart l'une de l'autre,
caractérisé en ce
que l'écart des feuilles (121 à 127 ; 227) l'une par rapport à l'autre peut être commandé par l'intermédiaire des baguettes d'écartement (142 à 147 ; 342 à 347) décalées dans l'écart vertical (AV) et reliées de manière articulée aux feuilles voisines, que les feuilles (121-127 ; 227) portent du côté du fond respectivement une charge (131 à 137) et sont couplées du côté supérieur à un dispositif d'enroulement (108 ; 308) de telle manière qu'à l'état enroulé, il y a un échelonnage en hauteur (MV) des feuilles dans lequel les baguettes d'écartement (142 à 147) sont essentiellement parallèles aux feuilles, la grandeur de l'échelonnage en hauteur pouvant être réduite par la poursuite du dégagement des feuilles sous l'influence des charges (131 à 137) de manière progressive, en allant de préférence vers zéro, que la liaison avec le dispositif d'enroulement (108 ; 308) est configurée de telle manière que la structure de baguettes qui est respectivement la plus en haut (156 ; 356) peut être alignée dans un plan horizontal,
que les espaces creux (160 ; 260) enfermés entre les feuilles couchées l'une derrière l'autre (121 à 127 ; 227) peuvent être fermés latéralement au moyen d'un dispositif de fermeture commandé (274, 276, 278) et que le dispositif de fermeture est formé par respectivement une plaque de fermeture (274) placée verticalement par rapport à l'extension en surface du matelas calorifuge (212), plaque qui est pourvue, sur le côté tourné vers les arêtes latérales des feuilles, d'une étanchéité élastique, de préférence d'une couche d'étanchéité élastique (278).

2. Dispositif calorifuge selon la revendication 1,
caractérisé en ce
que le matelas calorifuge a plus de deux feuilles (121 à 127) et que les baguettes d'écartement sont placées de manière telle qu'elles se situent, lorsque le matelas est à l'état enroulé, respectivement sur des lignes (150) parallèles l'une à l'autre.

3. Dispositif calorifuge selon la revendication 2,
caractérisé en ce
que les baguettes d'écartement (142 à 147) se situent, lorsque le matelas calorifuge (112) est à l'état complètement écarté, dans des plans horizontaux (150) se trouvant à un écart vertical prédéfini (AV) l'un par rapport à l'autre.

4. Dispositif calorifuge selon l'une des revendications 1 à 3,
caractérisé en ce
que les baguettes d'écartement (142 à 147) sont reliées aux feuilles par des languettes collantes (151 à 153) du type charnière qui sont fixées avec un montant (153) sur des surfaces opposées des baguettes d'écartement (142 à 147).

5. Dispositif calorifuge selon l'une des revendications 1 à 4,
caractérisé en ce
que l'écart vertical (AV) des baguettes d'écartement (142 à 147) correspond essentiellement à l'épaisseur maximale, c'est-à-dire à l'épaisseur du matelas calorifuge (112) à l'état écarté au maximum.

6. Dispositif calorifuge selon l'une des revendications 1 à 5,
caractérisé en ce
que la pose du dispositif de fermeture se fait en fonction de l'actionnement d'une commande d'écartement du matelas.

7. Dispositif calorifuge selon l'une des revendications 1 à 6,
caractérisé en ce
que la couche d'écartement présente une plaque de caoutchouc spongieux (278).

8. Dispositif calorifuge selon l'une des revendications 1 à 7,
caractérisé en ce
qu'au moins une feuille mère située à l'extérieur (128 ; 227) est guidée dans un rail latéral (168) dans lequel est logée une étanchéité à lèvre.

9. Dispositif calorifuge selon l'une des revendications 1 à 8,
caractérisé en ce
qu'un cylindre enrouleur (108 ; 308) est logé dans une boîte qui a une fente équipée d'une étanchéité à lèvre pour loger le matelas calorifuge.

10. Dispositif calorifuge selon l'une des revendications 1 à 9,
caractérisé en ce
que la charge est formée par des corps métalliques, en particulier des baguettes (131 à 137) en matière ferromagnétique et que, pour stabiliser le matelas calorifuge (112), une plaque magnétisée (116) est prévue du côté du fond, plaque contre laquelle les charges peuvent être poussées en tendant les feuilles (121 à 128).

11. Dispositif calorifuge selon l'une des revendications 1 à 10,
caractérisé en ce
que les feuilles sont en matière très transparente, de préférence en matière plastique.

12. Dispositif calorifuge selon l'une des revendications 1 à 11,
caractérisé en ce
que les feuilles ont une épaisseur d'environ 0,1 à 0,2 mm.

13. Dispositif calorifuge selon l'une des revendications 1 à 12,
caractérisé en ce
que les feuilles sont métallisées au vide, au moins partiellement.

14. Dispositif calorifuge selon l'une des revendications 1 à 13,
caractérisé en ce
que les baguettes d'écartement (142 à 147) sont en matière plastique métallisée au vide.

15. Dispositif calorifuge selon l'une des revendications 1 à 14,
caractérisé en ce
que les baguettes d'écartement sont en matière plastique et ont de préférence une enduction ou une composition réfléchissante.
